# EUROPEAN PATENT APPLICATION

(11) **EP 1 516 785 A1**
(43) Date of publication of application: **23.03.2005**
(21) Application number: 04255597.9
(22) Date of filing: 15.09.2004
(51) Int. Cl.: B60R 21/16

(54) **Air bags**

(30) Priority: 18.09.2003 IL 15799103
(71) Applicant: Cohen, Michael, 90912 Mobile Post North Yehuda (IL)
(72) Inventor: Cohen, Michael, 90912 Mobile Post North Yehuda (IL)
(74) Representative: Hartley, Andrew Philip

(57) **Abstract**

The invention provides an airbag device (10) comprising an airbag (12) and an inflator (14) for supplying gas to and expand the airbag (12), wherein the impacting surface (16) of the airbag (12) is provided with an array of inflatable projections (18) .

## Description

The present invention relates to airbags used in passenger vehicles which deploy automatically during a vehicle accident.

More particularly, the invention provides an airbag device which is safer for use for children and small adults, in comparison with airbags in common use at present.

Airbags are balloon cushions stored in front of vehicle passengers in an uninflated folded state, out of sight of those in the vehicle. Sensors in the vehicle are arranged to detect the high decelerations which are indicative of an accident, and allow very fast inflation of the bag by means of a stored or newly generated pressurized gas. The passenger is thus cushioned in a flexible manner and head and/or body impact with part of the vehicle are prevented. The technology is considered to be mature and many lives have been saved thereby.

For an airbag to fulfill its function, deployment must be extremely fast, as the time available between the moment the sensors recognize that an accident is taking place to the moment when a passenger or driver body part impacts and is injured by impact with a vehicle part can be about 1 second, more or less depending on the type of impact. Consequently some children and at-risk adults have been seriously injured and some have lost their lives as a result of the explosive impact of a deploying airbag. A further danger of airbags is that the bag may cause suffocation of the passenger or driver after deployment.

Much effort has already been expended to improve airbag safety, although practically all such measures degrade the safety provisions expected of the airbag. Due to the large number and volumous nature describing devices intended to improve airbag safety, only recent developments will be described, such data being indicative of the state of the art.

In the USA the National Highway Traffic Safety Administration (NHTSA) has and is investing considerable effort on the problem.

Undoubtedly the most drastic measure proposed by the NHTSA is to allow the use of cut-off switches in vehicles without a rear seat to protect children.

A further proposal is to "depower the bags by 20 - 35%".

The NHTSA is also allowing automakers to reduce the speed at which airbags deploy.

Clearly, every one of these proposals compromises the safety intended to be provided by the airbag.

Relevant disclosures have been found in US Patents, the latest of which are referred to herewith.

In US Patent 6,299,203 B1 Muller proposes a two-stage gas generator. A similar device is claimed by Quioc in US Patent No. 6,422,601 B1.

A two-compartment airbag is disclosed by Rasmussen in US Patent 6,260,877 B1. A thin low-pressure airbag extends in front of the standard airbag. Amamori in US Patent No. 6,502,858 B2 discloses an airbag with internal straps which tear if airbag pressure exceeds a predetermined value.

A further two-stage gas generator is proposed by Taguchi in US Patent No. 6,485,051, intended to moderately inflate the bag at a first stage and fast inflate thereafter. A different device yet of similar performance is claimed by Yoon et al. in US Patent Application No. 2002/0056975.

Mueller discloses a cascade-type airbag in US Patent No. 6,328,335 B1 wherein completion of a first stage inflation triggers a second stage.

Many of the above proposals rely on multi-component systems which in themselves degrade the reliability of the device.
There is therefore a need for an airbag device which maintains the reliability of the airbag system and yet avoids passenger or driver injury by hard impact or suffocation.

It is therefore one of the objects of the present invention to obviate the disadvantages of prior art airbags and to provide an airbag which is less liable to cause injury and particularly is safe for children and small adults as not causing suffocation.

It is a further object of the present invention to effect such improvement while maintaining the same reliability as the basic prior art device.

The present invention achieves the above objects by providing an airbag device comprising an airbag and an inflator for supplying gas to and expand said airbag, wherein the impacting surface of said airbag is provided with an array of inflatable projections.

In a preferred embodiment of the present invention there is provided an airbag device wherein contact, impact surfaces of said inflatable projections are substantially flat.

In a most preferred embodiment of the present invention there is provided an airbag device wherein contact, impact surfaces of said inflatable projections have at least one axis of at least 4 cm.

Yet further embodiments of the invention will be described hereinafter.

It will thus be realized that the novel device of the present invention serves to restrain the passenger in a more gentle manner than the standard airbag in use, yet such improvement is achieved without adding any mechanism which in itself degrades reliability. In preferred forms of the invention it will be seen that the projections proposed in the present invention are sufficiently wide so as to contact the bone structure around the eye without contacting the eye itself. Furthermore, the danger of suffocation is eliminated due to the spaces between the projections. These spaces have a further purpose of allowing partial collapse on impact with the body of a passenger, thus softening the blow of sudden inflation. In contradistinction with the proposals made by the NHTSA, reliability of deployment is not compromised in any manner.

The invention will now be described in connection with certain preferred embodiments with reference to the following illustrative figures so that it may be more fully understood.

With specific reference now to the figures in detail, it is stressed that the particulars shown are by way of example and for purposes of illustrative discussion of the preferred embodiments of the present invention only and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:
FIG. 1 is a perspective view of an array of projections covering a surface of an airbag in a preferred embodiment of the device according to the invention;
FIG. 2 is an elevational view of an airbag device according to the invention, shown in use during a road accident;
FIG. 3 is a perspective view of an array wherein the projections have a substantially flat outer extremity;
FIG. 4a is a plan view of a inflatable projection which is resilient and deformable;
FIG. 4b is a partially fragmented elevational view of the same embodiment; and
FIG. 5 is a detail view showing an embodiment of the projection which retracts in a volcano-like shape when under pressure.

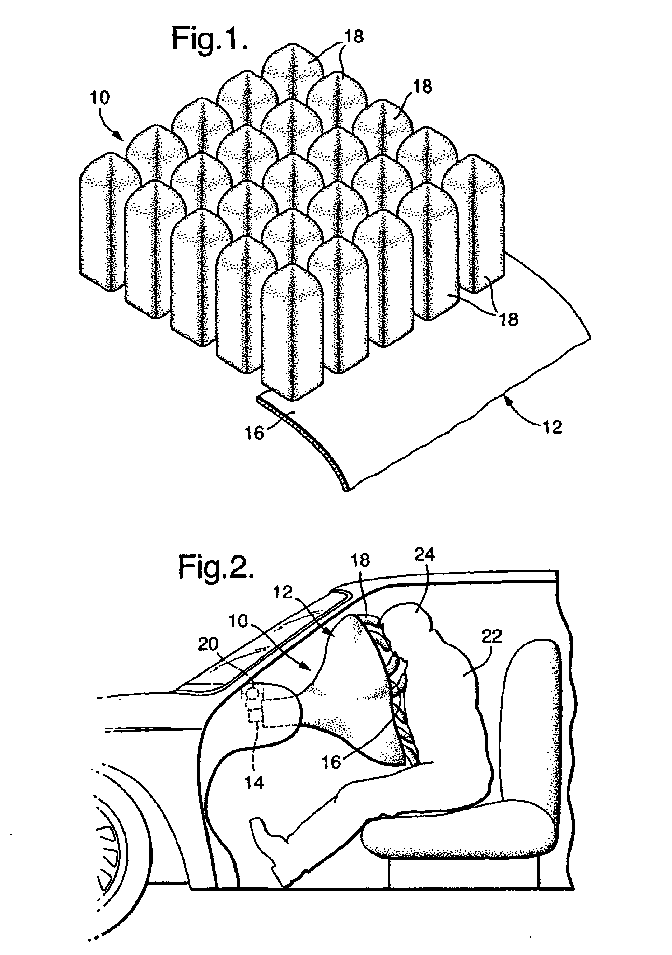

There is seen in FIG. 1 an array of projections 18 for an airbag device 10. The device 10 comprises an airbag 12 and an inflator 14, both seen in FIG. 2, for supplying gas to and expanding the airbag 12 and its projections 18.

The inflator 14, for which no novelty is claimed, is of the type generating gas when triggered by deceleration sensors. This type of inflator has the advantage of not requiring a leak-proof, high-speed high-pressure valve, as is required where high pressure gas is to be stored for a decade or more.

The impacting surface 16 of the airbag 12 is faced on the part of its rearward-facing surface with an array 18 of inflatable projections. When sensors 20 determine that a vehicle accident is in progress, pressured gas is generated and piped at high speed to the airbag 12. The projecting array 18 impacts the upper body 22, and later also the head 24 of the passenger/driver of a vehicle, as the airbag 12 fills. As seen in FIG. 2, pressure of the body 22 against the array 18 causes partial collapse of the array. The microseconds during which such collapse takes place increases deceleration time (and effects energy absorption). Deceleration rate of body is lower, therefore the forces on the human body are lower and thus the probability of sustaining significant injuries is reduced.

Preferably the array 18 of inflatable projections are provided with spaces therebetween.

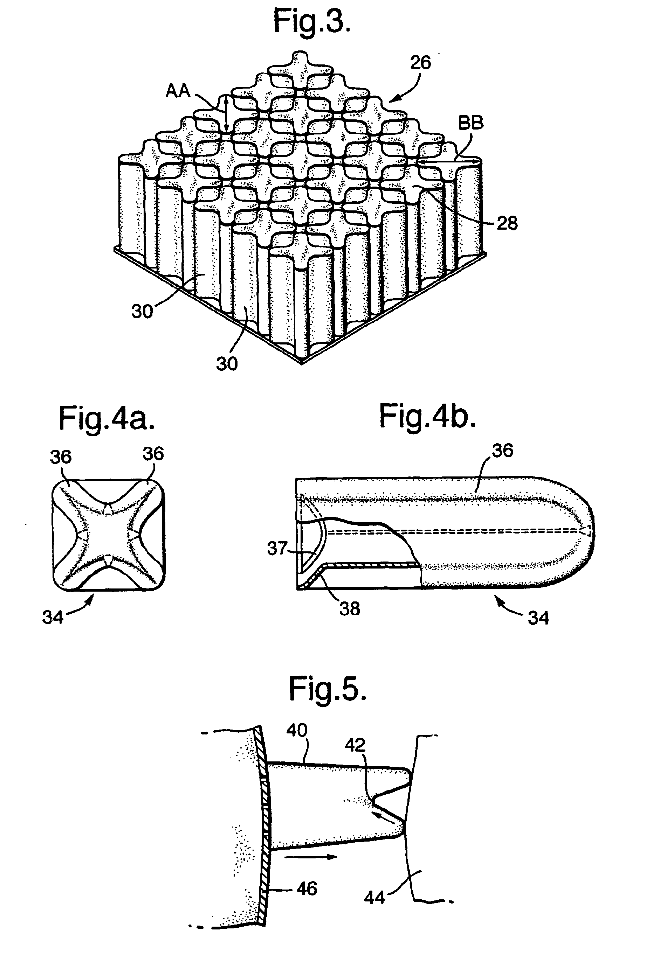

Turning now to FIG. 3, there is seen the rearward-facing section of an airbag device 26 wherein contact, impact surfaces 28 of the inflatable projections 30 are substantially flat. The resulting increase in area of surfaces 28, in comparison with semispherical ends, reduce the local pressure against the body during deployment resulting from a road accident.

The array preferably comprises at least 25 projections, as shown in the figure, and importantly not less than 16 projections.

The contact, impact surfaces 28 of the inflatable projections have at least one axis of at least 3 cm. Where surface space on the rearward-facing portion of the airbag is available, the contact, impact surfaces of the inflatable projections advantageously have a shorter axis AA of at least 4 cm. A preferred dimension for the longer axis BB is about 6 - 7 cm.

FIGS. 4a and 4b illustrate an inflatable projection 34 which is resilient and deformable. An array of inflatable projections 34 are attached to an airbag 12 as seen in FIG. 2. As seen in Fig. 2, the projections 34 bend to a side of least resistance, while absorbing part of the crash energy thereby. In the embodiment shown, the projection 34 has 4 rounded lobes 36. Bending is facilitated by the sloping surfaces 37, 38 which readily distort as rubber or a rubber-like elastomer is used as the molding material.

Referring now to FIG. 5, there is depicted a detail of an airbag device 46 wherein the projections 40 retract when contacted externally by volcano-shaped refolding of the projection apex 42. Thus some of the energy which must be absorbed during a crash to stop the motion of a body 44 in the vehicle is diverted into the energy needed for refolding of the projections 40.

It will be evident to those skilled in the art that the invention is not limited to the details of the foregoing illustrative embodiments and that the present invention may be embodied in other specific forms without departing from the spirit or essential attributes thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

## Claims

1. An airbag device comprising an airbag and an inflator for supplying gas to and expand said airbag, wherein the impacting surface of said airbag is provided with an array of inflatable projections.

2. An airbag device according to claim 1, wherein contact, impact surfaces of said inflatable projections are substantially flat.

3. An airbag device according to claim 1, wherein contact, impact surfaces of said inflatable projections have at least one axis of at least 3 cm.

4. An airbag device according to claim 1, wherein contact, impact surfaces of said inflatable projections have at least one axis of at least 4 cm.

5. An airbag device according to claim 1, wherein said inflatable projections are resilient and deformable.

6. An airbag device according to claim 1, wherein said inflatable projections are provided with spaces therebetween.

7. An airbag device according to claim 1, wherein said array comprises at least 16 projections.

8. An airbag device according to claim 1, wherein said array comprises at least 25 projections.

9. An airbag device according to claim 1, wherein said projections retract when contacted external by volcano-like refolding of the projection apex.
